# EUROPÄISCHE PATENTSCHRIFT

(11) **EP 1 554 543 B1**
(45) Veröffentlichungstag und Bekanntmachung des Hinweises auf die Patenterteilung: **08.03.2006**
(21) Anmeldenummer: 03769361.1
(22) Anmeldetag: 08.10.2003
(51) Int. Cl.: G01C 19/56

(54) **VERFAHREN ZUR ELEKTRONISCHEN ABSTIMMUNG DER AUSLESESCHWINGUNGSFREQUENZ EINES CORIOLISKREISELS**
METHOD FOR ELECTRONICALLY ADJUSTING THE SELECTIVE OSCILLATION FREQUENCY OF A CORIOLIS GYRO
PROCEDE POUR REGLER LA FREQUENCE DE L'OSCILLATION DE SELECTION D'UN GYROSCOPE VIBRANT

(30) Priorität: 18.10.2002 DE 10248734
(43) Veröffentlichungstag der Anmeldung: 20.07.2005
(73) Patentinhaber: LITEF GmbH, 79115 Freiburg (DE)
(72) Erfinder: SCHRÖDER, Werner, 77955 Ettenheim (DE)
(74) Vertreter: Müller, Frithjof E.
(86) Internationale Anmeldenummer: PCT/EP2003/011142
(87) Internationale Veröffentlichungsnummer: WO 2004/038334

(56) Entgegenhaltungen:
- WO-A-97/45699
- WO-A-99/19734
- DE-C1- 19 641 284

## Beschreibung

Die Erfindung betrifft ein Verfahren zur elektronischen Abstimmung der Frequenz der Ausleseschwingung auf die Frequenz der Anregungsschwingung bei einem Corioliskreisel.

Corioliskreisel (auch Vibrationskreisel genannt) werden in zunehmendem Umfang zu Navigationszwecken eingesetzt; sie weisen ein Massensystem auf, das in Schwingungen versetzt wird. Diese Schwingung ist in der Regel eine Überlagerung einer Vielzahl von Einzelschwingungen. Diese Einzelschwingungen des Massensystems sind zunächst voneinander unabhängig und lassen sich jeweils abstrakt als "Resonatoren" auffassen. Zum Betrieb eines Vibrationskreisels sind wenigstens zwei Resonatoren erforderlich: einer dieser Resonatoren (erster Resonator) wird künstlich zu Schwingungen angeregt, die im Folgenden als "Anregungsschwingung" bezeichnet wird. Der andere Resonator (zweiter Resonator) wird nur dann zu Schwingungen angeregt, wenn der Vibrationskreisel bewegt/gedreht wird. In diesem Fall treten nämlich Corioliskräfte auf, die den ersten Resonator mit dem zweiten Resonator koppeln, der Anregungsschwingung des ersten Resonators Energie entnehmen und diese auf die Ausleseschwingung des zweiten Resonators übertragen. Die Schwingung des zweiten Resonators wird im Folgenden als "Ausleseschwingung" bezeichnet. Um Bewegungen (insbesondere Drehungen) des Corioliskreisels zu ermitteln, wird die Ausleseschwingung abgegriffen und ein entsprechendes Auslesesignal (z. B. das Ausleseschwingungs-Abgriffsignal) daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-System als auch als Closed-Loop-System realisiert werden. In einem Closed-Loop-System wird über jeweilige Regelkreise die Amplitude der Ausleseschwingung fortlaufend auf einen festen Wert - vorzugsweise null - rückgestellt.

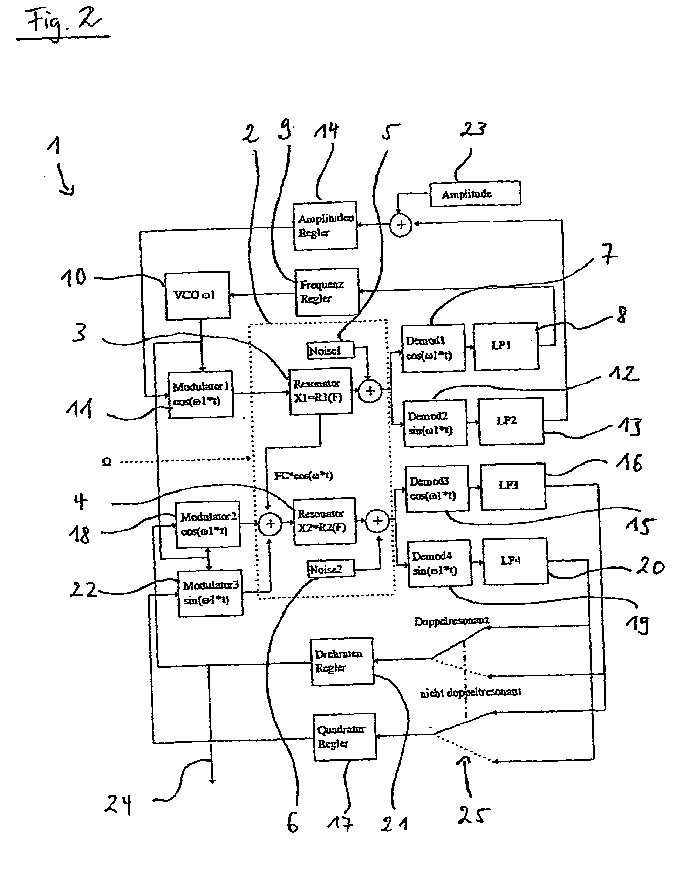

Im Folgenden wird zur weiteren Verdeutlichung der Funktionsweise eines Corioliskreisels unter Bezugnahme auf Figur 2 ein Beispiel eines Corioliskreisels in Closed-Loop-Ausführung beschrieben.

Ein solcher Corioliskreisel 1 weist ein in Schwingungen versetzbares Massensystem 2 auf, das im Folgenden auch als "Resonator" bezeichnet wird. Diese Bezeichnung ist zu unterscheiden von den oben erwähnten "abstrakten" Resonatoren, die Einzelschwingungen des "echten" Resonators darstellen. Wie bereits erwähnt, kann der Resonator 2 als System aus zwei "Resonatoren" (erster Resonator 3 und zweiter Resonator 4) aufgefasst werden. Sowohl der erste als auch der zweite Resonator 3, 4 sind jeweils an einen Kraftgeber (nicht gezeigt) und an ein Abgriffssystem (nicht gezeigt) gekoppelt. Das Rauschen, das durch die Kraftgeber und die Abgriffssysteme erzeugt wird, ist hier durch Noise1 (Bezugszeichen 5) und Noise2 (Bezugszeichen 6) schematisch angedeutet.

Der Corioliskreisel 1 weist des Weiteren vier Regelkreise auf:

Ein erster Regelkreis dient zur Regelung der Anregungsschwingung (d.h. der Frequenz des ersten Resonators 3) auf eine feste Frequenz (Resonanzfrequenz). Der erste Regelkreis weist einen ersten Demodulator 7, ein erstes Tiefpassfilter 8, einen Frequenzregler 9, einen VCO ("Voltage Controlled Oscillator") 10 und einen ersten Modulator 11 auf.

Ein zweiter Regelkreis dient zur Regelung der Anregungsschwingung auf eine konstante Amplitude und weist einen zweiten Demodulator 12, ein zweites Tiefpassfilter 13 und einen Amplitudenregler 14 auf.

Ein dritter und ein vierter Regelkreis dienen zur Rückstellung derjenigen Kräfte, die die Ausleseschwingung anregen. Dabei weist der dritte Regelkreis einen dritten Demodulator 15, ein drittes Tiefpassfilter 16, einen Quadraturregler 17 und einen zweiten Modulator 18 auf. Der vierte Regelkreis enthält einen vierten Demodulator 19, ein viertes Tiefpassfilter 20, einen Drehratenregler 21 und einen dritten Modulator 22.

Der erste Resonator 3 wird mit dessen Resonanzfrequenz ω1 angeregt. Die resultierende Anregungsschwingung wird abgegriffen, mittels des ersten Demodulators 7 in Phase demoduliert, und ein demoduliertes Signalanteil wird dem ersten Tiefpassfilter 8 zugeführt, der daraus die Summenfrequenzen entfernt. Das abgegriffene Signal wird im Folgenden auch als Anregungsschwingungs-Abgriffsignal bezeichnet. Ein Ausgangssignal des ersten Tiefpassfilters 8 beaufschlagt einen Frequenzregler 9, der in Abhängigkeit des ihm zugeführten Signals den VCO 10 so regelt, dass die In-Phase-Komponente im Wesentlichen zu Null wird. Dazu gibt der VCO 10 ein Signal an den ersten Modulator 11, der seinerseits einen Kraftgeber so steuert, dass der erste Resonator 3 mit einer Anregungskraft beaufschlagt wird. Ist die In-Phase-Komponente Null, so schwingt der erste Resonator 3 auf seiner Resonanzfrequenz ω1. Es sei erwähnt, dass sämtliche Modulatoren und Demodulatoren auf Basis dieser Resonanzfrequenz ω1 betrieben werden.

Das Anregungsschwingungs-Abgriffsignal wird des Weiteren dem zweiten Regelkreis zugeführt und durch den zweiten Demodulator 12 demoduliert, dessen Ausgabe das zweite Tiefpassfilter 13 passiert, dessen Ausgangssignal wiederum dem Amplitudenregler 14 zugeführt wird. In Abhängigkeit dieses Signals und eines Soll-Amplitudengebers 23 regelt der Amplitudenregler 14 den ersten Modulator 11 so, dass der erste Resonator 3 mit einer konstanten Amplitude schwingt (d.h. die Anregungsschwingung weist eine konstante Amplitude auf).

Wie bereits erwähnt wurde, treten bei Bewegung/Drehungen des Corioliskreisels 1 Corioliskräfte - in der Zeichnung durch den Term FC·cos(ω1·t) angedeutet - auf, die den ersten Resonator 3 mit dem zweiten Resonator 4 koppeln und damit den zweiten Resonator 4 zum Schwingen anregen. Eine resultierende Ausleseschwingung der Frequenz ω2 wird abgegriffen, sodass ein entsprechendes Ausleseschwingungs-Abgriffsignal (Auslesesignal) sowohl dem dritten als auch dem vierten Regelkreis zugeführt wird. Im dritten Regelkreis wird dieses Signal durch den dritten Demodulator 15 demoduliert, Summenfrequenzen durch das dritte Tiefpassfilter 16 entfernt und das tiefpassgefilterte Signal dem Quadraturregler 17 zugeführt, dessen Ausgangssignal den dritten Modulator 22 so beaufschlagt, dass entsprechende Quadraturanteile der Ausleseschwingung rückgestellt werden. Analog hierzu wird im vierten Regelkreis das Ausleseschwingungs-Abgriffsignal durch den vierten Demodulator 19 demoduliert, durchläuft das vierte Tiefpassfilter 20, und ein entsprechend tiefpassgefiltertes Signal beaufschlagt einerseits den Drehratenregler 21, dessen Ausgangssignal proportional zur momentanen Drehrate ist und als Drehraten-Messergebnis auf einen Drehratenausgang 24 gegeben wird, und andererseits den zweiten Modulator 18, der entsprechende Drehratenanteile der Ausleseschwingung rückstellt.

Ein Corioliskreisel 1 wie oben beschrieben kann sowohl doppelresonant als auch nichtdoppelresonant betrieben werden. Wird der Corioliskreisel 1 doppelresonant betrieben, so ist die Frequenz ω2 der Ausleseschwingung annähernd gleich der Frequenz ω1 der Anregungsschwingung, wohingegen im nichtdoppelresonanten Fall die Frequenz ω2 der Ausleseschwingung verschieden von der Frequenz ω1 der Anregungsschwingung ist. Im Fall der Doppelresonanz beinhaltet das Ausgangssignal des vierten Tiefpassfilters 20 entsprechende Information über die Drehrate, im nichtdoppelresonanten Fall dagegen das Ausgangssignal des dritten Tiefpassfilters 16. Um zwischen den unterschiedlichen Betriebsarten doppelresonant/nichtdopelresonant umzuschalten, ist ein Doppelschalter 25 vorgesehen, der die Ausgänge des dritten und vierten Tiefpassfilters 16, 20 wahlweise mit dem Drehratenregler 21 und dem Quadraturregler 17 verbindet.

Wenn der Corioliskreisel 1 doppelresonant betrieben werden soll, muss - wie erwähnt - die Frequenz der Ausleseschwingung auf die Frequenz der Anregungsschwingung abgestimmt werden. Dies kann beispielsweise auf mechanischem Wege erfolgen, in dem Material am Massensystem (dem Resonator 2) abgetragen wird. Alternativ hierzu kann die Frequenz der Ausleseschwingung auch mittels eines elektrischen Feldes, in dem der Resonator 2 schwingbar gelagert ist, also durch Änderung der elektrischen Feldstärke, eingestellt werden. Damit ist es möglich, auch während des Betriebs des Corioliskreisels 1 eine elektronische Abstimmung der Frequenz der Ausleseschwingung auf die Frequenz der Anregungsschwingung durchzuführen.

Dokument WO-A-97/45699 offenbart einen Corioliskreisel mit Frequenzabgleich durch Anlegen einer Gleichspannungs-Vorspannung (Bias) an die Ausleseelektroden. Aus Dokument DE-C-196 41 284 ist ebenfalls ein Corioliskreisel mit Frequenzabgleich durch Anlegen einer Gleichspannungs-Vorspannung (Bias) an Elektroden bekannt. Dokument WO-A-99/19734 beschreibt einen Corioliskreisel mit Frequenzabgleich durch Anlegen einer Kraft an den Resonator.

Die der Erfindung zugrunde liegende Aufgabe ist es, ein Verfahren bereit zu stellen, mit dem in einem Corioliskreisel die Frequenz der Ausleseschwingung auf die Frequenz der Anregungsschwingung elektronisch abgestimmt werden kann.

Diese Aufgabe wird durch das Verfahren gemäß den Merkmalen des Patentanspruchs 1 gelöst. Ferner stellt die Erfindung einen Corioliskreisel gemäß Patentanspruch 10 bereit. Vorteilhafte Ausgestaltungen und Weiterbildungen des Erfindungsgedankens finden sich in jeweiligen abhängigen Ansprüchen.

Erfindungsgemäß wird bei einem Verfahren zur elektronischen Abstimmung der Frequenz der Ausleseschwingung auf die Frequenz der Anregungsschwingung in einem Corioliskreisel der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Frequenz der Ausleseschwingung so geregelt wird, dass eine Phasenverschiebung zwischen einem Störsignal, das die Störkraft erzeugt, und dem im Auslesesignal enthaltenen Störanteil möglichst klein wird.

Unter "Resonator" wird hierbei das gesamte in Schwingung versetzbare Massensystem (oder ein Teil davon) des Corioliskreisels verstanden - also der mit Bezugsziffer 2 gekennzeichnete Teil des Corioliskreisels.

Eine der Erfindung zugrunde liegende wesentliche Erkenntnis ist, dass die "Durchlaufzeit" einer Störung, also einer künstlichen Änderung der Ausleseschwingung durch Beaufschlagen des Resonators mit entsprechenden Störkräften, durch den Resonator, d. h. die Zeit, die ab dem Wirken der Störung am Resonator bis zum Abgriff der Störung als Teil des Auslesesignals verstreicht, von der Frequenz der Ausleseschwingung abhängt. Damit ist die Verschiebung zwischen der Phase des Störsignals und der Phase des in dem Auslesesignal enthaltenen Störanteilsignals ein Maß für die Frequenz der Ausleseschwingung. Es lässt sich zeigen, dass die Phasenverschiebung ein Minimum annimmt, wenn die Frequenz der Ausleseschwingung mit der Frequenz der Anregungsschwingung im Wesentlichen übereinstimmt. Wenn man daher die Frequenz der Ausleseschwingung so regelt, dass die Phasenverschiebung ein Minimum annimmt, so ist damit gleichzeitig die Frequenz der Ausleseschwingung auf die Frequenz der Anregungsschwingung im Wesentlichen abgestimmt.

Wesentlich hierbei ist, dass die Störkräfte auf den Resonator lediglich die Ausleseschwingung, nicht jedoch die Anregungsschwingung ändern. Unter Bezugnahme auf Fig. 2 bedeutet dies, dass die Störkräfte nur den zweiten Resonator 4 beaufschlagen, nicht jedoch den ersten Resonator 3.

Vorzugsweise wird die Störkraft durch ein Störsignal erzeugt, das entsprechenden Kraftgebern zugeführt wird bzw. auf Signale, die den Kraftgebern zugeführt werden, aufaddiert wird. Beispielsweise kann, um die Störkraft zu erzeugen, ein Störsignal auf jeweilige Regel-/Rückstellsignale zur Regelung/Kompensation der Ausleseschwingung aufaddiert werden.

Vorzugsweise ist das Störsignal ein Wechselsignal, beispielsweise eine Überlagerung von Sinus- bzw. Kosinussignalen. Dieses Störsignal weist in der Regel eine feste Störfrequenz auf, womit der Störanteil des Ausleseschwingungs-Abgriffsignals durch einen entsprechenden Demodulationsprozess, der bei besagter Störfrequenz erfolgt, ermittelt werden kann.

Das oben beschriebene Verfahren kann sowohl auf einen Open-Loop- als auch auf einen Closed-Loop-Corioliskreisel angewandt werden. Im letzteren Fall wird das Störsignal vorzugsweise auf jeweilige Regel-/Rückstellsignale zur Regelung/Kompensation der Ausleseschwingung, aufaddiert. Beispielsweise kann das Störsignal auf das Ausgangssignal des Quadraturregelkreises aufaddiert, und der Störanteil aus einem Signal ermittelt werden, das an einem Quadraturregler des Quadraturregelkreises anliegt oder von diesem ausgegeben wird. Ferner ist es möglich, das Störsignal zum Ausgangssignal des Drehratenregelkreises hinzuzuaddieren, und den Störanteil aus einem Signal zu ermitteln, das an einem Drehratenregler des Drehratenregelkreises anliegt oder von diesem ausgegeben wird. Der Begriff "Auslesesignal" beinhaltet alle in diesem Absatz beschriebenen Signale, aus denen der Störanteil ermittelt werden kann. Auch kann damit das Ausleseschwingungs-Abgriffssignal gemeint sein.

Die Frequenzregelung der Ausleseschwingung, d.h. die Kraftübertragung der zur Frequenzregelung nötigen Regelkräfte erfolgt hierbei durch Regelung der Stärke eines elektrischen Felds, in dem ein Teil des Resonators schwingt, wobei eine elektrische Anziehungskraft zwischen dem Resonator und einem den Resonator umgebenden rahmenfesten Gegenstück vorzugsweise nichtlinear ist.

Die Erfindung stellt weiterhin einen Corioliskreisel bereit, der einen Drehratenregelkreis und einen Quadraturregelkreis aufweist und gekennzeichnet ist durch eine Einrichtung zur elektronischen Abstimmung der Frequenz der Ausleseschwingung auf die Frequenz der Anregungsschwingung. Die Einrichtung zum elektronischen Abstimmen weist hierbei auf:
- eine Störeinheit, die auf den Drehratenregelkreis oder den Quadraturregelkreis ein Störsignal gibt,
- eine Störsignal-Detektiereinheit, die einen Störanteil ermittelt, der in einem die Ausleseschwingung repräsentierenden Auslesesignal enthalten ist und durch das Störsignal erzeugt wurde, und
- eine Regeleinheit, die die Frequenz der Ausleseschwingung so regelt, dass eine Phasenverschiebung zwischen dem Störsignal und dem im Auslesesignal enthaltenen Störanteil möglichst klein wird.

Vorzugsweise gibt die Störeinheit das Störsignal auf den Drehratenregelkreis, und die Störsignal-Detektiereinheit ermittelt den Störanteil aus einem Signal, das an einem Drehratenregler des Drehratenregelkreises anliegt oder von diesem ausgegeben wird. Eine weitere Alternative ist, das Störsignal durch die Störeinheit auf den Quadraturregelkreis zu geben, wobei dann die Störsignal-Detektiereinheit den Störanteil aus einem Signal ermittelt, das an einem Quadraturregler des Quadraturregelkreises anliegt oder von diesem ausgegeben wird.

Im Folgenden wird unter Bezugnahme auf die begleitenden Figuren die Erfindung in beispielsweiser Ausführungsform näher erläutert. Es zeigen:
- **Figur 1**: den schematischen Aufbau eines Corioliskreisels, der auf dem erfindungsgemäßen Verfahren basiert;
- **Figur 2**: den schematischen Aufbau eines herkömmlichen Corioliskreisels.

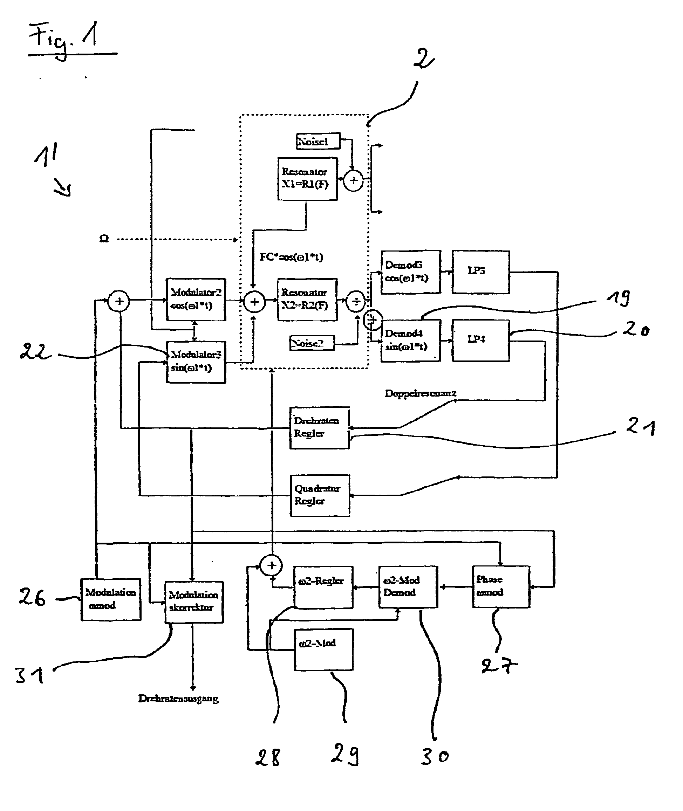

Zunächst wird unter Bezugnahme auf Figur 1 das erfindungsgemäße Verfahren in beispielsweiser Ausführungsform näher erläutert. Dabei sind Teile bzw. Einrichtungen, die denen aus Figur 2 entsprechen, mit den selben Bezugszeichen gekennzeichnet und werden nicht nochmals erläutert.

Ein Corioliskreisel 1' ist zusätzlich mit einer Störeinheit 26, einer ersten Demodulationseinheit 27, einem Ausleseschwingungs-Frequenzregler 28, einer Ausleseschwingungsmodulationseinheit 29, einer zweiten Demodulationseinheit 30 und einer Modulationskorrektureinheit 31 versehen.

Die Störeinheit 26 erzeugt ein erstes Störsignal, vorzugsweise ein Wechselsignal mit einer Frequenz ωmod, das auf das Ausgabesignal eines. Drehratenreglers 21, d.h. am Kraftausgang der Drehratenregelung) aufaddiert wird. Das somit erhaltene zusammengesetzte Signal wird einem Modulator 18 (zweiter Modulator) zugeführt, dessen entsprechendes Ausgabesignal mittels eines Kraftgebers (nicht gezeigt) den Resonator 2 beaufschlagt. Das Wechselsignal wird zusätzlich der ersten Demodulationseinheit 27 zugeführt.

Das Ausleseschwingungs-Abgriffsignal wird durch einen vierten Demodulator 19 demoduliert, wobei das Ausgangssignal des vierten Demodulators 19 ein viertes Tiefpassfilter 20 beaufschlagt, dessen Ausgangssignal einem Drehratenregler 21 zugeführt wird. Ein Ausgangssignal des Drehratenreglers 21 wird sowohl dem zweiten Modulator 18 als auch der ersten Demodulationseinheit 27 zugeführt, die dieses Signal auf Basis der Modulationsfrequenz ωmod, die der Frequenz des durch die Störeinheit 26 erzeugten Wechselsignals entspricht, demoduliert und damit den Störanteil bzw. das Wechselsignal, das die durch die Störeinheit 26 erzeugte Störung repräsentiert, ermittelt. Insbesondere wird durch die erste Demodulationseinheit 27 die Phase des im Auslesesignal enthaltenen Störanteilsignals ermittelt und mit der Phase des Störsignals, das von der Störeinheit 26 erzeugt wird, verglichen. Die somit errechnete Phasenverschiebung wird dem Ausleseschwingungs-Frequenzregler 28 zugeführt, der die Frequenz der Ausleseschwingung so einstellt, dass die Phasenverschiebung minimal wird. Um die Phasenverschiebung auf ein Minimum zu regeln, wird die elektronisch abstimmbare Frequenz der Ausleseschwingung mit einem zweiten Störsignal ω2-Mod durch die Ausleseschwingungsmodulationseinheit 29 moduliert. Dadurch ergibt sich eine Variation der Phasenverschiebung entsprechend diesem zweiten Störsignal. Die Phasenverschiebung aus der ersten Demodulationseinheit 27 wird nun entsprechend dem zweiten Störsignal ω2-Mod demoduliert. Ist die Phasenverschiebung aus der ersten Demodulationseinheit 27 im Wesentlichen minimal, so wird das Signal am Eingang des Ausleseschwingungs-Frequenzreglers 28 im Wesentlichen Null. Ist die Phasenverschiebung dagegen nicht minimal, so ergibt sich ein von Null abweichendes Signal am Eingang des Ausleseschwingungs-Frequenzreglers 28 mit entsprechendem Vorzeichen, so dass der Ausleseschwingungs-Frequenzregler 28 die Phasenverschiebung mittels der elektronischen Frequenzregelung minimiert. Ist ein derartiges Minimum erreicht, so stimmen die Frequenzen von Anregungsschwingung und Ausleseschwingung im Wesentlichen überein.

Wie bereits erwähnt, kann alternativ hierzu das durch die Störeinheit 26 erzeugte Wechselsignal auch auf ein Ausgangssignal des Quadraturreglers 17 aufaddiert werden. In diesem Fall wäre das der ersten Demodulationseinheit 27 zugeführte Signal am Eingang oder Ausgang des Quadraturreglers 17 abzugreifen.

Ferner ist es prinzipiell möglich, das Störsignal an einer beliebigen Stelle in den Quadraturregelkreis/Drehratenregelkreis einzuspeisen (nicht nur unmittelbar vor dem zweiten bzw. dritten Modulator 18, 22), d. h. an einer beliebigen Stelle zwischen dem Abgriff für die Ausleseschwingung und dem zweiten bzw. dritten Modulator 18, 22.

Es ist vorteilhaft, nach dem Einschalten des Corioliskreisels 1' die Modulationsfrequenz ωmod des Wechselsignals auf einen hohen Wert zu setzen, um eine schnelle Grobregelung der Frequenz der Ausleseschwingung zu erzielen. Dann kann auf eine relativ niedrige Modulationsfrequenz ωmod umgeschaltet werden, um eine Resonanz der Ausleseschwingung genau einzustellen. Zudem kann nach einer gewissen Zeit nach Einlaufen des Drehratenreglers 21 bzw. des Quadraturreglers 17 die Amplitude der Modulationsfrequenz ωmod stark reduziert werden.

Grundsätzlich können alle Modulationsprozesse auch auf Basis von bandbegrenztem Rauschen erfolgen. D.h., alle vorangehend beschriebenen Wechselsignale (das erste Störsignal ωmod als auch das zweite Störsignal ω2-Mod) können durch entsprechende Rauschsignale ersetzt werden, wobei in diesem Fall die entsprechenden Demodulationsprozesse auf Basis von Kreuzkorrelation erfolgen, d.h. auf Basis einer Korrelation zwischen den Rauschsignalen und dem Auslesesignal, das durch die Rauschsignale bewirkte Rauschanteile (Störanteile) enthält.

Bei einem beispielhaften Verfahren zur elektronischen Abstimmung der Frequenz der Ausleseschwingung auf die Frequenz der Anregungsschwingung in einem Corioliskreisel wird der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Frequenz der Ausleseschwingung so geregelt wird, dass die Größe des in dem Auslesesignal enthaltenden Störanteils möglichst klein wird.

Eine wesentliche Erkenntnis ist, dass eine künstliche Änderung der Ausleseschwingung im Drehraten- oder Quadraturkanal um so stärker insbesondere im jeweils dazu orthogonalen Kanal sichtbar ist, je weniger die Frequenz der Ausleseschwingung mit der Frequenz der Anregungsschwingung übereinstimmt. Die "Durchschlagsstärke" einer derartigen Störung auf das Ausleseschwingungs-Abgriffsignal (insbesondere auf den orthogonalen Kanal) ist also ein Maß dafür, wie genau die Frequenz der Ausleseschwingung mit der Frequenz der Anregungsschwingung übereinstimmt. Wenn man also die Frequenz der Ausleseschwingung so regelt, dass die Durchschlagsstärke ein Minimum annimmt, d.h. dass die Größe des in dem Ausleseschwingungs-Abgriffsignal enthaltenen Störanteils minimal wird, so ist damit gleichzeitig die Frequenz der Ausleseschwingung auf die Frequenz der Anregungsschwingung im Wesentlichen abgestimmt.

Wesentlich hierbei ist, dass die Störkräfte auf den Resonator lediglich die Ausleseschwingung, nicht jedoch die Anregungsschwingung ändern. Unter Bezugnahme auf Fig. 2 bedeutet dies, dass die Störkräfte nur den zweiten Resonator 4 beaufschlagen, nicht jedoch den ersten Resonator 3.

Bei einem weiteren beispielhaften Verfahre, zur elektronischen Abstimmung der Frequenz der Ausleseschwingung auf die Frequenz der Anregungsschwingung in einem Corioliskreisel wird der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Störkraft definiert ist als diejenige Kraft, die durch das Signalrauschen im Auslesesignal hervorgerufen wird. Die Frequenz der Ausleseschwingung wird hierbei so geregelt, dass die Größe des in dem Auslesesignal enthaltenen Störanteils, d.h. der Rauschanteil, möglichst klein wird.

Unter "Resonator" wird hierbei das gesamte in Schwingung versetzbare Massensystem des Corioliskreisels verstanden - also der mit Bezugsziffer 2 gekennzeichnete Teil des Corioliskreisels. Wesentlich hierbei ist, dass die Störkräfte auf den Resonator lediglich die Ausleseschwingung, nicht jedoch die Anregungsschwingung ändern. Unter Bezugnahme auf Fig. 2 würde dies bedeuten, dass die Störkräfte nur den zweiten Resonator 4 beaufschlagen, nicht jedoch den ersten Resonator 3.

Eine dem weiteren beispielhaften Verfahren zugrunde liegende wesentliche Erkenntnis ist, dass ein Störsignal in Form von Signalrauschen, das direkt im Ausleseschwingungs-Abgriffssignal bzw. am Eingang der Regelkreise (Drehratenregelkreis/Quadraturregelkreis) auftritt, nach "Durchgang" durch die Regelkreise und den Resonator umso stärker im Ausleseschwingungs-Abgriffsignal beobachtbar ist, je weniger die Frequenz der Ausleseschwingung mit der Frequenz der Anregungsschwingung übereinstimmt. Das Signalrauschen, das das Signalrauschen der Ausleseschwingungs-Abgriffselektronik bzw. der random walk des Corioliskreisels ist, beaufschlagt nach "Durchlauf" durch die Regelkreise die Kraftgeber und erzeugt somit entsprechende Störkräfte, die den Resonator beaufschlagen und damit eine künstliche Änderung der Ausleseschwingung hervorrufen. Die "Durchschlagsstärke" einer derartigen Störung auf das Ausleseschwingungs-Abgriffsignal ist also ein Maß dafür, wie genau die Frequenz der Ausleseschwingung mit der Frequenz der Anregungsschwingung übereinstimmt. Wenn man also die Frequenz der Ausleseschwingung so regelt, dass die Durchschlagsstärke ein Minimum annimmt, d.h. dass die Größe des in dem Ausleseschwingungs-Abgriffsignal enthaltenen Störanteils, d.h. des Rauschanteils, minimal wird, so ist damit gleichzeitig die Frequenz der Ausleseschwingung auf die Frequenz der Anregungsschwingung abgestimmt.

Das zuerst beschriebene erfindungsgemäße Verfahren zur elektronischen Abstimmung der Ausleseschwingungsfrequenz kann mit dem ersten beispielhaften Verfahren und/oder dem zweiten beispielhaften Verfahren beliebig kombiniert werden. Beispielsweise ist es möglich, bei Inbetriebnahme des Corioliskreisels das zuerst beschriebene Verfahren anzuwenden (schnelles Einschwingverhalten), und anschließend das zweite beispielhafte Verfahren (langsamer Regelprozess) im eingeschwungenen Betrieb anzuwenden. Konkrete technische Ausgestaltungen sowie weitere Details zu den Verfahren kann der Fachmann den Patentanmeldungen "Verfahren zur elektronischen Abstimmung der Ausleseschwingungsfrequenz eines Corioliskreisels". DE-A-10248733 und DE-A-10248735 desselben Anmelders entnehmen in denen jeweils das erste beispielhafte Verfahren bzw. das zweite beispielhafte Verfahren beschrieben sind.

## Patentansprüche

1. Verfahren zur elektronischen Abstimmung der Frequenz der Ausleseschwingung auf die Frequenz der Anregungsschwingung in einem Corioliskreisel (1'), wobei
- der Resonator (2) des Corioliskreisels (1') durch eine Störkraft so beaufschlagt wird, dass
a) die Anregungsschwingung im Wesentlichen unbeeinflusst bleibt, und
b) die Ausleseschwingung so geändert wird, dass ein die Ausleseschwingung repräsentierendes Auslesesignal einen entsprechenden Störanteil enthält, wobei
- die Frequenz der Ausleseschwingung so geregelt wird, dass eine Phasenverschiebung zwischen einem die Störkraft erzeugenden Störsignal und dem in dem Auslesesignal enthaltenen Störanteil möglichst klein wird.

2. Verfahren nach Anspruch 1, **dadurch gekennzeichnet, dass** die Störkraft durch ein Störsignal erzeugt wird, das auf jeweilige Regel-/Rückstellsignale zur Regelung/Kompensation der Ausleseschwingung aufaddiert wird.

3. Verfahren nach Anspruch 1 oder 2, **dadurch gekennzeichnet, dass** das Störsignal ein Wechselsignal ist.

4. Verfahren nach Anspruch 3, **dadurch gekennzeichnet, dass** das Störsignal eine feste Störfrequenz aufweist, und der Störanteil aus dem Auslesesignal durch Demodulieren des Auslesesignals mit der festen Störfrequenz ermittelt wird.

5. Verfahren nach Anspruch 1 oder 2, **dadurch gekennzeichnet, dass** das Störsignal ein bandbegrenztes Rauschsignal ist.

6. Verfahren nach Anspruch 5, **dadurch gekennzeichnet, dass** eine Demodulation des Störanteils aus dem Auslesesignal durch Korrelation des Störsignals mit dem Auslesesignal erfolgt.

7. Verfahren nach einem der Ansprüche 2 bis 6, **dadurch gekennzeichnet, dass** das Störsignal auf das Ausgangssignal des Quadraturregelkreises aufaddiert wird, und der Störanteil aus einem Signal ermittelt wird, das an einem Quadraturregler (17) des Quadraturregelkreises anliegt oder von diesem ausgegeben wird.

8. Verfahren nach einem der Ansprüche 2 bis 7, **dadurch gekennzeichnet, dass** das Störsignal zum Ausgangssignal des Drehratenregelkreises hinzuaddiert wird, und der Störanteil aus einem Signal ermittelt wird, das an einem Drehratenregler (21) des Drehratenregelkreises anliegt oder von diesem ausgegeben wird.

9. Verfahren nach einem der vorstehenden Ansprüche, **dadurch gekennzeichnet, dass** die Frequenzregelung der Ausleseschwingung durch Regelung der Stärke eines elektrischen Felds erfolgt, in dem ein Teil des Resonators (2) des Corioliskreisels (1') schwingt.

10. Corioliskreisel, der einen Drehratenregelkreis, einen Quadraturregelkreis und eine Einrichtung zur elektronischen Abstimmung der Frequenz der Ausleseschwingung auf die Frequenz der Anregungsschwingung es Resonators (2) des Corioliskreisel (1') aufweist, **gekennzeichnet durch** :
- eine Störeinheit (26), die derart angeordnet ist, dass sie auf den Drehratenregelkreis oder den Quadraturregelkreis ein Störsignal gibt,
- eine Störsignal-Detektiereinheit (27), die derart angeordnet ist, dass sie einen Störanteil ermittelt, der in einem die Ausleseschwingung repräsentierenden Auslesesignal enthalten ist und **durch** das Störsignal erzeugt wurde, und
- eine Regeleinheit (28), die derart angeordnet ist, dass sie die Frequenz der Ausleseschwingung so regelt, dass eine Phasenverschiebung zwischen dem Störsignal und dem im Auslesesignal enthaltenen Störanteil möglichst klein wird.

11. Corioliskreisel (1') nach Anspruch 10, **dadurch gekennzeichnet, dass** die Störeinheit (26) derart angeordnet ist, dass sie das Störsignal auf den Drehratenregelkreis gibt, und die Störsignal-Detektiereinheit (27) derart angeordnet ist, dass sie den Störanteil aus einem Signal ermittelt, das an einem Drehratenregler (21) des Drehratenregelkreises anliegt oder von diesem ausgegeben wird.

12. Corioliskreisel (1') nach Anspruch 10, **dadurch gekennzeichnet, dass** die Störeinheit (26) derart angeordnet ist, dass sie das Störsignal auf den Quadraturregelkreis gibt, und die Störsignal-Detektiereinheit (27) derart angeordnet ist, dass sie den Störanteil aus einem Signal ermittelt, das an einem Quadraturregler (17) des Quadraturregelkreises anliegt oder von diesem ausgegeben wird.

## Claims

1. A method for electronic tuning of the frequency of the read oscillation to the frequency of the stimulation oscillation in a Coriolis gyro (1'), wherein
- the resonator (2) of the Coriolis gyro (1') has a disturbance force applied to it such that
a) the stimulation oscillation remains essentially uninfluenced, and
b) the read oscillation is changed such that a read signal which represents the read oscillation contains a corresponding disturbance component, wherein
- the frequency of the read oscillation is controlled such that any phase shift between a disturbance signal which produces the disturbance force and the disturbance component which is contained in the read signal is as small as possible.

2. The method as claimed in claim 1, **characterized in that** the disturbance force is produced by a disturbance signal which is added to the respective control/reset signals for control/compensation of the read oscillation.

3. The method as claimed in claim 1 or 2, **characterized in that** the disturbance signal is an alternating signal.

4. The method as claimed in claim 3, **characterized in that** the disturbance signal is at a fixed disturbance frequency, and the disturbance component is determined from the read signal by demodulation of the read signal at the fixed disturbance frequency.

5. The method as claimed in claim 1 or 2, **characterized in that** the disturbance signal is a band-limited noise signal.

6. The method as claimed in claim 5, **characterized in that** the disturbance component is demodulated from the read signal by correlation of the disturbance signal with the read signal.

7. The method as claimed in one of claims 2 to 6, **characterized in that** the disturbance signal is added to the output signal from the quadrature control loop, and the disturbance component is determined from a sig-nal which is applied to a quadrature regulator (17) in the quadrature control loop, or is emitted from it.

8. The method as claimed in one of claims 2 to 7, **characterized in that** the disturbance signal is added to the output signal from the rotation rate control loop, and the disturbance component is determined from a sig-nal which is applied to a rotation rate regulator (21) in the rotation rate control loop, or is emitted from it.

9. The method as claimed in one of the preceding claims, **characterized in that** the frequency of the read oscillation is controlled by controlling the intensity of an electrical field in which a part of the resonator (2) of the Coriolis gyro (1') oscillates.

10. A Coriolis gyro (1') which has a rotation rate control loop, a quadrature control loop, and a device for electronic tuning of the frequency of the read oscillation to the frequency of the stimulation oscillation of the resonator (2) of the Coriolis gyro (1'), **characterized by**:
- a disturbance unit (26) which is arranged such that it passes a disturbance signal to the rotation rate control loop or to the quadrature control loop,
- a disturbance signal detection unit (27), which is arranged such that it determines a disturbance component which is contained in a read signal (which represents the read oscillation) and has been produced by the disturbance signal, and
- a control unit (28), which is arranged such that it controls the frequency of the read oscillation such that any phase shift between the disturbance signal and the disturbance component which is contained in the read signal is as small as possible.

11. The Coriolis gyro (1') as claimed in claim 10, **characterized in that** the disturbance unit (26) which is arranged such that it passes the disturbance signal to the rotation rate control loop, and the disturbance signal detection unit (27) which is arranged such that it determines the disturbance component from a signal which is applied to a rotation rate regulator (21) in the rotation rate control loop, or is emitted from it.

12. The Coriolis gyro (1') as claimed in claim 10, **characterized in that** the disturbance unit (26) which is arranged such that it passes the disturbance signal to the quadrature control loop, and the disturbance signal detection unit (27) which is arranged such that it determines the disturbance component from a signal which is applied to a quadrature regulator (17) in the quadrature control loop, or is emitted from it.

## Revendications

1. Procédé pour déterminer électroniquement la fréquence d'oscillation de sélection sur la fréquence d'oscillation d'excitation dans un gyroscope vibrant (1'), dans lequel
- le résonateur (2) du gyroscope vibrant (1') est alimenté par une force perturbatrice de sorte que
a) l'oscillation d'excitation reste sensiblement non influencée, et
b) l'oscillation de sélection est modifiée de sorte qu'un signal de sélection représentant l'oscillation de sélection comporte une composante perturbatrice appropriée, où
- la fréquence de l'oscillation de sélection est régulée de sorte qu'un décalage de phase entre un signal perturbateur générant la force perturbatrice et la composante perturbatrice comprenant le signal de sélection est le plus petit possible.

2. Procédé selon la revendication 1, **caractérisé en ce que** la force perturbatrice est générée par un signal perturbateur, qui est additionné aux signaux respectifs de réglage/recalage en vue de la régulation/compensation de l'oscillation de sélection.

3. Procédé selon la revendication 1 ou 2, **caractérisé en ce que** le signal perturbateur est un signal alternatif.

4. Procédé selon la revendication 3, **caractérisé en ce que** le signal perturbateur présente une fréquence perturbatrice fixe, et la composante perturbatrice du signal de sélection est recherchée par démodulation du signal de sélection avec la fréquence perturbatrice fixe.

5. Procédé selon la revendication 1 ou 2, **caractérisé en ce que** le signal perturbateur est un signal de bruit à bande limitée.

6. Procédé selon la revendication 5, **caractérisé en ce qu'**une démodulation de la composante perturbatrice du signal de sélection se produit par corrélation du signal perturbateur avec le signal de sélection.

7. Procédé selon une des revendications 2 à 6, **caractérisé en ce que** le signal perturbateur est additionné au signal de sortie du circuit de régulation en quadrature, et la composante perturbatrice est recherchée à partir d'un signal qui existe dans un régulateur en quadrature (17) du circuit de régulation en quadrature ou est délivré par celui-ci.

8. Procédé selon l'une des revendications 2 à 7, **caractérisé en ce que** le signal perturbateur est additionné au signal de sortie du circuit de réglage de vitesse de rotation, et la composante perturbatrice est recherchée à partir d'un signal, qui existe dans un régulateur de vitesse de rotation (21) du circuit de réglage de vitesse de rotation ou est délivré par celui-ci.

9. Procédé selon l'une des revendications précédentes, **caractérisé en ce que** le réglage de fréquence de l'oscillation de sélection se produit par réglage de la force d'un champ électrique, dans lequel une partie du résonateur (2) du gyroscope vibrant (1') oscille.

10. Gyroscope vibrant, qui présente un circuit de réglage de vitesse de rotation, un circuit de régulation en quadrature et un dispositif en vue de la détermination électronique de la fréquence de l'oscillation de sélection à partir de la fréquence d'oscillation d'excitation du résonateur (2) du gyroscope vibrant (1'), **caractérisé par** :
- une unité perturbatrice (26), qui est disposée de sorte qu'elle délivre un signal perturbateur au circuit de réglage de vitesse de rotation ou le circuit de réglage en quadrature,
- une unité de détection de signal perturbateur (27), qui est disposée de sorte qu'elle recherche une composante perturbatrice, qui est comprise dans un signal de sélection représentant l'oscillation de sélection et est générée par le signal perturbateur, et
- une unité de réglage (28) qui est disposée de sorte qu'elle régule la fréquence de l'oscillation de sélection de sorte qu'un décalage de phase entre le signal perturbateur et la composante perturbatrice comprise dans le signal de sélection est le plus petit possible.

11. Gyroscope vibrant (1') selon la revendication 10, **caractérisé en ce que** l'unité perturbatrice (26) est disposée de sorte qu'elle délivre le signal perturbateur au circuit de réglage de vitesse de rotation, et l'unité de détection de signal perturbateur (27) est disposée de sorte qu'elle recherche la composante perturbatrice à partir d'un signal, qui existe dans un régulateur de vitesse de rotation (21) du circuit de réglage de vitesse de rotation ou est délivré par celui-ci.

12. Gyroscope vibrant (1') selon la revendication 10, **caractérisé en ce que** l'unité perturbatrice (26) est disposée de sorte qu'elle délivre le signal perturbateur sur le circuit de réglage en quadrature, et l'unité de détection de signal perturbateur (27) est disposée de sorte qu'elle recherche la composante perturbatrice à partir d'un signal, qui existe dans un régulateur en quadrature (17) du circuit de réglage en quadrature ou est délivré par celui-ci.
